# EUROPÄISCHE PATENTSCHRIFT

(11) **EP 2 239 476 B1**
(45) Veröffentlichungstag und Bekanntmachung des Hinweises auf die Patenterteilung: **25.01.2012**
(21) Anmeldenummer: 10169159.0
(22) Anmeldetag: 06.03.2003
(51) Int. Cl.: F16D 3/223, F16D 3/84, F16D 3/2237

(54) **Gegenbahngelenk**
Counter track joint
Articulation à voies opposées

(30) Priorität: 07.03.2002 DE 10209933; 07.03.2002 DE 10212540
(43) Veröffentlichungstag der Anmeldung: 13.10.2010
(62) Teilanmeldung aus: 03704705.7
(73) Patentinhaber: Shaft-Form-Engineering GmbH, 77756 Hausach (DE)
(72) Erfinder: Jacob, Martin D., 61350 Bad Homburg (DE); Jacob, Werner, 60598 Frankfurt am Main (DE)
(74) Vertreter: KEIL & SCHAAFHAUSEN Patentanwälte

(56) Entgegenhaltungen:
- DE-C1- 4 031 819
- DE-U- 1 831 826
- FR-A- 2 689 586
- GB-A- 2 347 730
- US-A- 1 916 442

## Beschreibung

Die Erfindung betrifft ein Gegenbahngelenk, das ein antriebsseitiges Ende und ein abtriebsseitiges Ende aufweist mit einer Innennabe, einer Außennabe und einem ringförmigen Käfig mit einer kugeligen Außenfläche, der zwischen der Innennabe und der Außennabe angeordnet ist und mehrere radiale Fenster aufweist, in denen Kugeln geführt sind. Die Innennabe weist eine Innennabenachse und eine Außenfläche auf, in der erste Innenlaufrillen und zweite Innenlaufrillen um die Innennabenachse abwechselnd verteilt angeordnet sind. Die ersten Innenlaufrillen verlaufen dabei hinterschnittfrei von dem antriebsseitigen Ende ausgehend in Richtung auf das abtriebsseitige Ende, wobei sich ihr Bahngrund dabei von der Innennabenachse entfernt. Die zweiten Innenlaufrillen verlaufen hinterschnittfrei von dem abtriebsseitigen Ende ausgehend in Richtung auf das antriebsseitige Ende, wobei sich ihr Bahngrund dabei von der Innennabenachse entfernt. Die Außennabe weist eine Außennabenachse und eine Innenfläche auf, in der erste Außenlaufrillen und zweite Außenlaufrillen um die Außennabenachse abwechselnd verteilt angeordnet sind. Dabei liegen die ersten Innenlaufrillen ersten Außenlaufrillen und die zweiten Innenlaufrillen zweiten Auβenlaufrillen gegenüber und bilden mit diesen jeweils ein Paar. Die ersten Außenlaufrillen verlaufen hinterschnittfrei von dem antriebsseitigen Ende ausgehend in Richtung auf das abtriebsseitige Ende, wobei sich ihr Bahngrund dabei der Außennabenachse annähert. Die zweiten Außenlaufrillen verlaufen hinterschnittfrei von dem abtriebsseitigen Ende ausgehend in Richtung auf das antriebsseitige Ende, wobei sich ihr Bahngrund dabei der Außennabenachse annähert.

Aus der DE 18 31 826 U ist ein Gelenk bekannt, bei welchem die Innen- und Außenlaufrillen jeweils durch Kreisbogenabschnitte mit zueinander versetzten Krümmungsmittelpunkten gebildet werden, so dass sich der jeweilige Bahngrund zwischen dem antriebsseitigen Ende und dem abtriebsseitigen Ende jeweils sowohl abschnittsweise der Achse annähret als auch sich abschnittsweise von dieser entfernt. Der Käfig soll nach einer in der DE 18 31 826 U als nachteilig beschriebenen Variante zwischen dem inneren und dem äußeren Gelenkkörper zentriert und geführt sein.

Weiter ist aus der DE 40 31 819 C1 ein Glenk bekannt, bei welchem der Käfig mit Spiel zwischen dem inneren und dem äußeren Gelenkkörper geführt sein soll.

Gelenke der eingangs genannten Art werden unter anderem in Längs- und Seitenwellen oder in Lenkungswellen von Kraftfahrzeugen eingesetzt. Aus der DE 199 05 451 C2 ist ein Gleichlaufgelenk bekannt, dessen Außennabe aus einem ebenen Blechteil hergestellt wird, das nach dem Einformen der Außenlaufrillen zu einem offenen Ring oder zu Ringsegmenten gebogen wird und das im Betrieb in einem geschlossenen ringförmigen Aufnahmeteil gehalten ist. Durch die Ausbildung der Außenlaufrillen in dem Blechteil entstehen zwischen diesem und dem Aufnahmeteil Hohlräume, in denen das Blechteil lose federn kann. In Abhängigkeit der Elastizität des Blechteils können bei bestimmten Lastfällen Verformungen in der Außennabe auftreten, die die zulässigen Toleranzen überschreiten. Zudem müssen die Kugeln bei diesem bekannten Gleichlaufgelenk einzeln in den Käfig und die Laufrillenpaare eingesetzt werden. Dieser manuell ausgeführte Montageschritt ist zeitaufwändig.

Der Erfindung liegt daher die Aufgabe zugrunde, ein Gegenbahngelenk der eingangs genannten Art bereitzustellen, das auch großen Belastungen, die bspw. bei Lastwechseln im Antriebsstrang auftreten können, standhält und bei gleichbleibend hoher Fertigungspräzision für die Großserienfertigung geeignet ist, und das einfacher und schneller montierbar ist.

Die der Erfindung zugrundeliegende Aufgabe wird dadurch gelöst, dass die Außennabe wenigstens zwei miteinander verbundene Elemente umfasst, die auf der Außennabenachse hintereinander liegen und die gemeinsam den Käfig zentrieren. Bei diesem Aufbau des Gegenbahngelenks wird der Käfig durch die Elemente der Außennabe geführt, so dass die Innenfläche des Käfigs nicht für die Führung des Käfigs speziell ausgebildet sein muss, sondern bspw. zylindrisch gestaltet sein kann. Die Innennabe lässt sich folglich direkt in den Käfig einsetzen. Auf diese Weise ist es möglich, den Käfig, in den zumindest jede zweite Kugel eingesetzt ist, in eines der Elemente der Außennabe einzuführen und darauffolgend das zweite Element der Außennabe mit dem den Käfig enthaltenden Element zu verbinden. Das manuelle einzelne Einsetzen jeder Kugel in den Käfig entfällt dabei für wenigstens jede zweite Kugel. Die Montage des Gegenbahngelenks kann dadurch schneller und einfacher erfolgen.

Nach einer Ausführungsform der Erfindung umfasst die Außennabe zwei massive miteinander verbundene Ringe. Diese können hohe Kräfte in radialer und in Umfangsrichtung aufnehmen, so dass die Belastbarkeit der Außennabe durch deren Teilung in zwei Elemente nicht beeinträchtigt wird.

Eine automatische Montage der Kugeln wird ermöglicht, wenn die beiden Ringe der Außennabe ineinander greifen, wobei einer der Ringe die ersten Außenlaufrillen und der zweite Ring die zweiten Auslaufrillen aufweist. Der Käfig lässt sich so auf die Innennabe aufsetzen, wobei die Kugeln automatisiert durch die Fenster in den Käfig und auf die Innennabe eingebracht werden können. Zur Fertigstellung des Gelenks werden dann lediglich die beiden Ringe der Außennabe aus axial entgegengesetzten Richtungen auf den Käfig mit den Kugeln aufgesteckt und miteinander verbunden. Dabei weisen die großen Öffnungen der Außenlaufrillen in Richtung der Aufsteckbewegung, so dass die Kugeln in ihnen aufgenommen werden.

Alternativ oder zusätzlich hierzu ist es möglich, an wenigstens einem Ende eines Außennabenteils eine profilierte Scheibe vorzusehen, die bereichsweise auf der Käfigaußenfläche den Käfig zentrierend aufliegt. Der Käfig selbst kann so direkt in das Außennabenteil, welches zusammen mit der Scheibe die Außennabe bildet, eingesetzt werden und wird anschließend durch die Befestigung der profilierten Scheibe an dem Außennabenteil zentriert in diesem gehalten. Gleichzeitig ist es möglich, zumindest die Hälfte der Kugeln bereits zusammen mit dem Käfig in dessen Fenster eingesetzt in das Außennabenteil einzuführen.

Einer weiteren Ausführungsform der Erfindung entsprechend sind sowohl an dem antriebsseitigen Ende als auch an dem abtriebsseitigen Ende des Außennabenteils profilierte Scheiben vorgesehen, die bereichsweise auf der Käfigaußenfläche den Käfig zentrierend aufliegen. Diese Ausführungsform eignet sich insbesondere für die Verwendung einer Außennabe, die zum Anschluss eines treibenden oder anzutreibenden Bauteils einen Außenflansch trägt, an dem die beiden profilierten Lochscheiben befestigbar sind.

Vorzugsweise weist die wenigstens eine profilierte Scheibe einen Anlagebereich auf, mit dem sie zur Positionierung relativ zu dem Außennabenteil mit diesem in Eingriff bringbar ist. Der Käfig ist auf diese Weise indirekt über die wenigstens eine Lochscheibe in dem Außennabenteil zentriert.

Alternativ hierzu kann die wenigstens eine profilierte Scheibe mit einem Anlagebereich versehe sein, mit dem sie zur Positionierung relativ zu dem Außennabenteil an einem an dem Außennabenteil befestigten Aufnahmeflansch anliegt. Die wenigstens eine profilierte Scheibe wird bei dieser Ausführungsform über ein Befestigungsblech an dem Außennabenteil gehalten und durch dieses relativ zu dem Außennabenteil zentriert. Dadurch ist auch bei dieser Ausführungsform der Käfig über die wenigstens eine Scheibe und den Aufnahmeflansch in dem Außennabenteil zentriert. Zur Übertragung eines Drehmoments von der Außennabe auf den Aufnahmeflansch ist es erforderlich, dass dieser drehfest mit dem Außennabenteil verbunden ist. Dies kann bspw. mittels Nocken erfolgen, die in entsprechende Ausnehmungen am Außenumfang des Außennabenteils eingreifen.

In Weiterbildung des Erfindungsgedankens ist es vorgesehen, dass die wenigstens eine Scheibe entsprechend der Anzahl der Außenlaufrillen von dem Außennabenteil wegragende Ausbuchtungen aufweist, die jeweils mit einer der Außenlaufrillen einen Hohlraum bildend in Verbindung stehen. Die wenigstens eine profilierte Scheibe dient bei dieser Ausführungsform gleichzeitig zur Führung der Kugeln des Käfigs in axiale Richtung. In dem Hohlraum, der durch die Ausbuchtungen der wenigstens einen profilierten Scheibe gebildet werden, kann in dem Gegenbahngelenk selbst ein Schmiermittelreservoir vorgesehen werden, wobei das Schmiermittel durch die Fliehkraft im Betrieb des Gegenbahngelenks in das Schmiermittelreservoir gedrückt wird.

Dem Einsatz des Gegenbahngelenks entsprechend können die profilierten Scheiben entweder als Lochscheiben oder als geschlossene Käfigführungsdeckel ausgebildet sein, wobei Lochscheiben das Durchführen einer treibenden oder anzutreibenden Welle durch den Durchbruch in der Scheibe erlauben. Durch einen geschlossenen Käfigführungsdeckel kann das Eindringen von Schmutz in das Gelenk vermieden werden.

Im Folgenden wird die Erfindung unter Bezugnahme auf die Zeichnung anhand von Ausführungsbeispielen näher erläutert.

Es zeigen:
- Fig. 1: einen Längsschnitt durch ein nicht erfindungsgemäßes Gegenbahngelenk,
- Fig. 2: einen Schnitt durch das Gegenbahngelenk nach Fig. 1 entlang der Linie II-II,
- Fig. 3: einen Längsschnitt durch die Außennabe von Fig. 1 während des Einsetzens des Käfigs,
- Fig. 4: eine Seitenansicht der Außennabe nach Fig. 3 während des Ein- setzens des Käfigs,
- Fig. 5: eine Seitenansicht einer Außennabe nach einer weiteren nicht erfindungsgemäβen Ausfüh- rungsform,
- Fig. 6: einen Längsschnitt eines Gegenbahngelenks mit einer Außennabe nach Fig. 5,

- Fig. 7: einen Längsschnitt durch ein Gegenbahngelenk nach einer weiteren nicht erfindungsgemäβen Ausführungsform,
- Fig. 8: eine Schnittansicht der Außennabe nach Fig. 7 mit Aufnahmeteil,
- Fig. 9: eine Schnittansicht entlang der Linie IX-IX in Fig. 7,
- Fig. 10: eine Schnittansicht entlang der Linie X-X in Fig. 8
- Fig. 11: ausschnittsweise eine Seitenansicht einer Außennabe nach einer erfindungsgemäßen Ausführungsform,
- Fig. 12: einen Schnitt durch die Außennabe nach Fig. 11 entlang der Linie XII-XII,
- Fig. 13: einen Schnitt durch die Außennabe von Fig. 11 entlang der Linie XIII-XIII mit eingesetzter Innennabe,
- Fig. 14: einen Schnitt durch ein Gegenbahngelenk nach einer weiteren erfindungsgemäßen Aus- führungsform,
- Fig. 15: eine Seitenansicht einer Außennabe nach einer weiteren erfindungsgemäßen Ausfüh- rungsform,
- Fig. 16: einen Schnitt durch die Außennabe nach Fig. 15 entlang der Linie XVI-XVI mit eingesetzter Innennabe,
- Fig. 17: einen Schnitt durch die Außennabe von Fig. 15 entlang der Linie XVII-XVII,

- Fig. 18: eine Teilschnittansicht einer Außennabe nach einer weiteren erfindungsgemäßen Ausfüh- rungsform und
- Fig. 19: einen Schnitt durch die Außennabe nach Fig. 18 entlang der Linie XIX-XIX mit eingesetzter Innennabe.

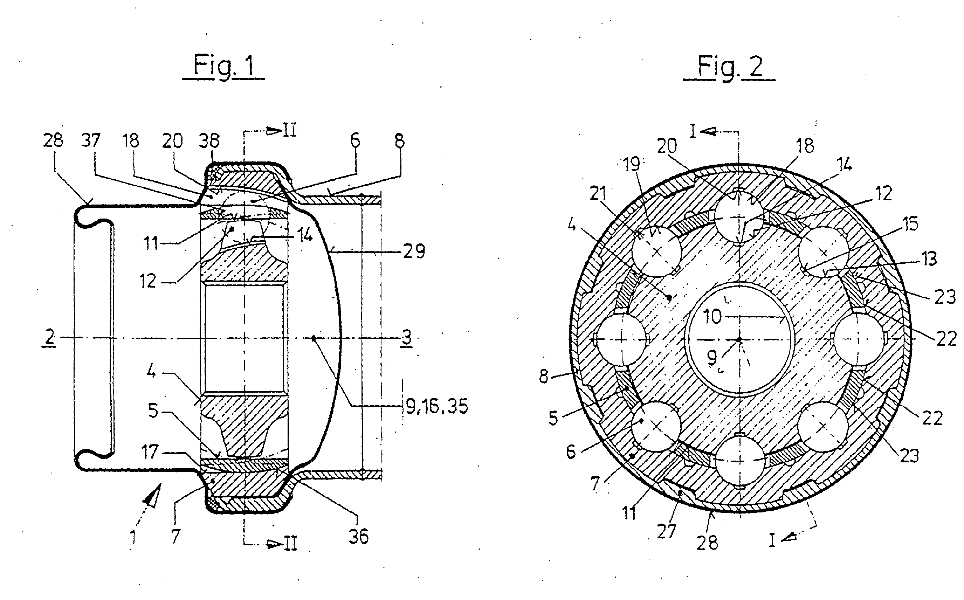

Eine erste Ausführungsform eines Gegenbahngelenks 1 ist in den Fig. 1 bis 4 dargestellt. In Fig. 1 ist ein antriebsseitiges Ende 2 und ein abtriebsseitiges Ende 3 angedeutet, wobei die Bezeichnungen "antriebsseitig" und "abtriebsseitig" in der folgenden Beschreibung rein beispielhaft zur besseren Unterscheidbarkeit der beiden Enden gewählt wurde. Selbstverständlich sind beide Enden 2, 3 zur Verbindung mit einem treibenden oder einem anzutreibenden Bauteil geeignet.

Das Gegenbahngelenk 1 weist von innen nach außen eine Innennabe 4, einen Käfig 5, in dem Kugeln 6 geführt sind, eine Außennabe 7 und ein Aufnahmeteil 8 auf.

Die Innennabe 4 ist ein ringförmiges Bauteil mit zentraler Innennabenachse 9 und einer profilierten Innenfläche 10 zur Verbindung mit einem treibenden oder anzutreibenden Bauteil. Die Außenfläche 11 der Innennabe 4 weist mehrere, regelmäßig und abwechselnd auf dem Umfang verteilt angeordnete erste Innenlaufrillen 12 und zweite Innenlaufrillen 13 auf.

Die ersten Innenlaufrillen verlaufen hinterschnittfrei ausgehend von dem antriebsseitigen Ende 2 in Richtung auf das abtriebsseitige Ende 3. Ihr Bahngrund 14 entfernt sich dabei von der Innennabenachse 9. Die zweiten Innenlaufrillen 13 verlaufen hinterschnittfrei von dem abtriebsseitigen Ende 3 ausgehend in Richtung auf das antriebsseitige Ende 2, wobei sich ihr Bahngrund 15 dabei von der Innennabenachse 9 entfernt.

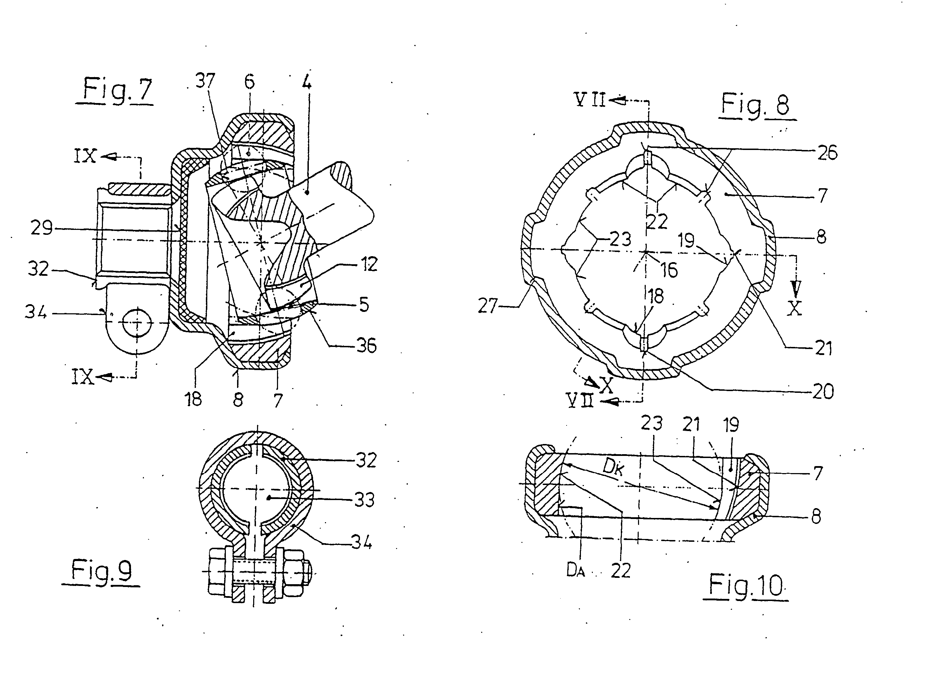

Die Außennabe 7 ist ein einstückiges ringförmiges Bauteil mit einer Außennabenachse 16, die in der gestreckten Stellung des Gegenbahngelenks nach Fig. 1 mit der Innennabenachse 9 der Innennabe 4 zusammenfällt. Die Innenfläche 17 der Außennabe 7 weist erste Außenlaufrillen 18 und zweite Außenlaufrillen 19 auf, die um die Außennabenachse 16 regelmäßig und abwechselnd verteilt angeordnet sind. Wie in Fig. 2 dargestellt, liegen im fertig montierten Zustand des Gegenbahngelenks 1 erste Innenlaufrillen 12 der Innennabe 4 ersten Außenlaufrillen 18 der Außennabe 7 gegenüber und zweite Innenlaufrillen 13 liegen den zweiten Außenlaufrillen 19 gegenüber und bilden mit diesen jeweils ein Paar. In den in den Fig. 1 bis 6 dargestellten Ausführungsformen sind in der Innennabe 4 und der Außennabe 7 jeweils acht Laufrillenpaare ausgebildet. Die Anzahl der Laufrillenpaare kann jedoch auch ein anderes ganzzahliges Vielfaches von Vier sein, wie bspw. in den Fig. 7 und 8 dargestellt.

Die ersten Außenlaufrillen 18 der Außennabe 7 verlaufen hinterschnittfrei von dem antriebsseitigen Ende 2 ausgehend in Richtung auf das abtriebsseitige Ende 3 hin, wobei sich ihr Bahngrund 20 dabei der Außennabenachse 16 annähert. Die zweiten Außenlaufrillen 19 verlaufen hinterschnittfrei von dem abtriebseitigen Ende 3 ausgehend in Richtung auf das antriebsseitige Ende 2 hin, wobei sich ihr Bahngrund 21 dabei der Außennabenachse 16 annähert.

Zwischen den Außenlaufrillen 18, 19 sind in der Innenfläche 17 der Außennabe 7 paarweise aneinander angrenzende erste Käfigzentrierungsflächen 22 und zweite Käfigzentrierungsflächen 23 ausgebildet. Die ersten Käfigzentrierungsflächen 22 grenzen jeweils an die ersten Außenlaufrillen 18 an, während die zweiten Käfigzentrierungsflächen 23 an die zweiten Außenlaufrillen 19 angrenzen. Dabei verlaufen die ersten Käfigzentrierungsflächen 22 hinterschnittfrei von dem antriebsseitigen Ende 2 ausgehend in Richtung auf das abtriebsseitige Ende 3 hin und nähern sich der Außennabenachse 16 an. Auch die zweiten Käfigzentrierungsflächen 23 verlaufen hinterschnittfrei von dem abtriebsseitigen Ende 3 ausgehend in Richtung auf das antriebsseitige Ende 2 hin und nähern die sich dabei der Außennabenachse 16 an. Mit anderen Worten nimmt der Innendurchmesser D_{A} der Außennabe 7 in zwei aneinander gegenüberliegenden Käfigzentrierungsflächen von einem Ende zum gegenüberliegenden Ende ab. Dabei ist der Innendurchmesser D_{A} der Außennabe 7 in dem Bereich zwischen dem antriebsseitigen Ende 2 und der Mitte der Außennabe 7 für die ersten Käfigzentrierungsflächen 22 bzw. zwischen dem abtriebsseitigen Ende 3 und der Mitte der Außennabe 7 für die zweiten Käfigzentrierungsflächen 23 zumindest so groß wie der Außendurchmesser D_{K} des Käfigs 5. Im Bereich zwischen der Mitte der Außennabe 7 und dem abtriebsseitigen Ende 3 für die ersten Käfigzentrierungsflächen 22 bzw. zwischen der Mitte der Außennabe 7 und dem antriebsseitigen Ende 2 für die zweiten Käfigzentrierungsflächen 23 sind diese der Außenkontur des Käfigs 5 angepasst.

Zwischen den Außenlaufrillen 18, 19 der Außennabe 7 und zwischen den Käfigzentrierungsflächen 22, 23 verlaufen jeweils Entlastungsrillen 26, die bei der spanlosen Herstellung der Außenlaufrillen 18, 19 durch Umformung, bspw. durch Prägen oder Hämmern, verdrängtes Material aufnehmen können.

In dem in den Fig. 1 und 2 dargestellten Ausführungsbeispiel ist die Außennabe 7 von einem Aufnahmeteil 8 in Form eines Anschweißblechflansches umgriffen. Das Aufnahmeteil 8 ist über Vorsprünge 27, die in entsprechende Ausnehmungen der Außennabe 7 eingreifen, drehfest mit dieser verbunden. Am antriebsseitigen Ende 2 ist eine das Aufnahmeteil 8 teilweise umgreifende Kappe 28 dargestellt, die zur Befestigung eines nicht abgebildeten Faltbalgs zur Abdichtung des Gegenbahngelenks dient. Am abtriebsseitigen Ende 3 des Gegenbahngelenks 1 ist in dem Aufnahmeteil 8 eine Dichtscheibe 29 vorgesehen, die das Gegenbahngelenk 1 abdichtet. Der von der Dichtscheibe 29 gebildete Hohlraum kann zudem als Schmiermittelreservoir für das Gegenbahngelenk 1 genutzt werden.

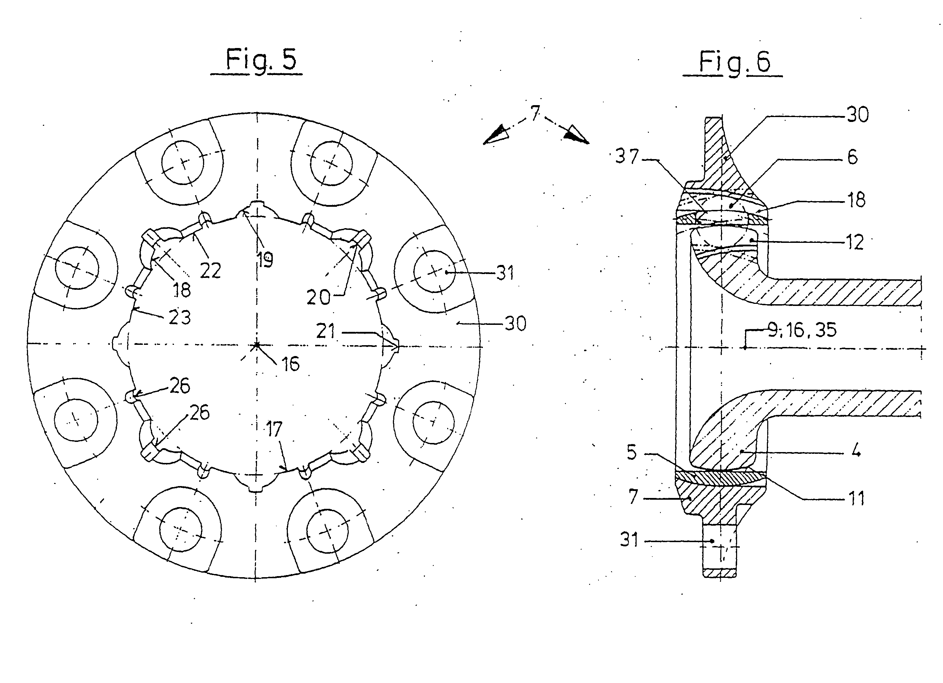

In den Fig. 5 und 6 ist eine weitere Ausführungsform des Gegenbahngelenks 1 dargestellt, wobei gleiche Bauteile mit denselben Bezugsziffern bezeichnet sind. Die Außennabe 7 des Gegenbahngelenks 1 ist im Gegensatz zu der in den Fig. 1 und 2 dargestellten Ausführungsform nicht von einem Aufnahmeteil 8 umgeben, sondern trägt einen Anschlussflansch 30. In dem Anschlussflansch 30 sind mehrere Durchgangsbohrungen 31 vorgesehen, um die Außennabe 7 mit einem treibenden oder anzutreibenden Bauteil zu verbinden.

Darüber hinaus ist in Fig. 6 die Innennabe 4 nicht als ein ringförmiges Bauteil mit einer Innenverzahnung 10 ausgebildet, sondern als eine Hohlwelle, in deren Außenfläche 11 die Innenlaufrillen 12, 13 angeordnet sind.

In den Fig. 7 bis 10 ist eine Ausführungsform des Gegenbahngelenks 1 dargestellt, die bspw. als Gleichlauflenkungsgelenk eingesetzt werden kann. Gleiche Bauteile sind mit den selben Bezugsziffern bezeichnet.

Bei dieser Ausführungsform ist die Innennabe 4 als Welle ausgebildet, auf deren Außenfläche 11 erste Innenlaufrillen 12 und zweite Innenlaufrillen 13 angeordnet sind. Die Außennabe 7 ist von einem Aufnahmeteil 8 umgriffen und drehfest mit diesem verbunden. Das Aufnahmeteil 8 weist einen längsgeschlitzten Ansatz 32 mit einer Anschlussbohrung 33 auf. Der Ansatz 32 trägt zudem eine Befestigungsschelle 34. Wie am besten aus der Darstellung von Fig. 8 zu erkennen ist, weist das Gegenbahngelenk 1 nach dieser Ausführungsform zwei erste Außenlaufrillen 18 und zwei zweite Außenlaufrillen 19, d. h. insgesamt vier Laufrillen auf.

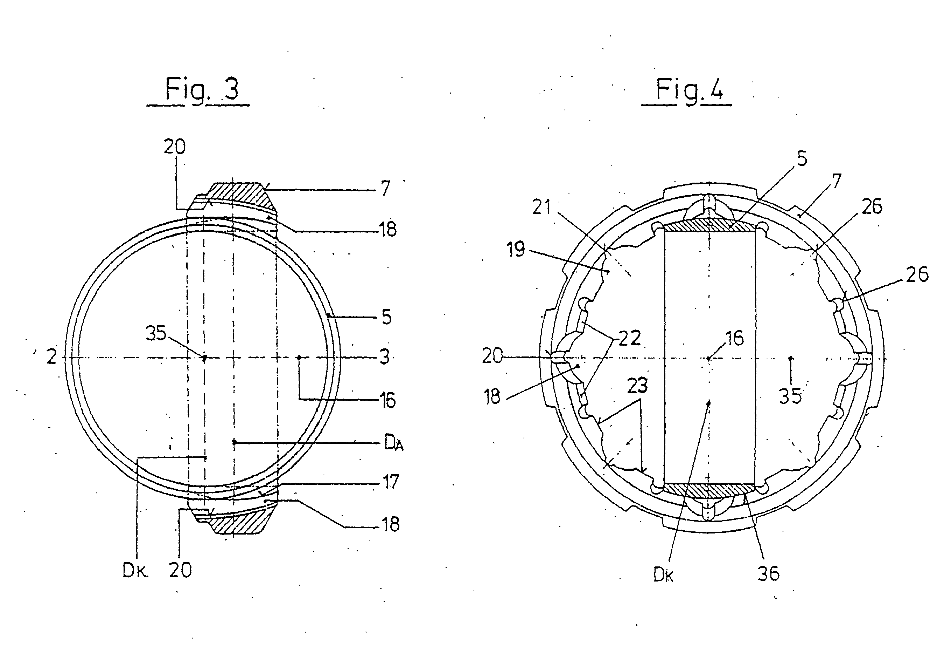

Im Folgenden wird nun die Montage eines Gegenbahngelenks unter Bezugnahme auf die Fig. 3, 4 und 10 erläutert.

Zunächst wird der Käfig 5 in die Außennabe 7 eingesetzt. Hierzu wird der Käfig 5 so verschwenkt, dass seine Achse 35 im Wesentlichen senkrecht zu der Außennabenachse 16 steht. Wie am besten in Fig. 4 zu erkennen, weist der Käfig 5 eine kugelige Außenfläche 36 auf, d. h. der Käfig 5 entspricht einer aus einer Kugel herausgeschnittenen Scheibe mit einem zylindrischen Durchbruch. Auch die Käfigzentrierungsflächen 22 bzw. 23 weisen zumindest in ihrem der Außennabenachse 16 angenäherten Bereich zwischen der Mitte der Außennabe 7 und einem Ende 3 bzw. 2 eine Kontur auf, die einem Abschnitt eines Kreisbogens nachgebildet ist. Der Außendurchmesser D_{K} des Käfigs 5 ist dabei kleiner oder gleich dem Innendurchmesser D_{A} in der Mitte der Außennabe 7.

Der Käfig 5 kann daher in seiner in den Fig. 3 und 4 dargestellten Ausrichtung relativ zu der Außennabe 7 geführt von einander gegenüberliegenden Käfigzentrierungsflächen in die Außennabe 7 eingeführt werden, bis der Käfig 5 gegen den Bereich der Käfigzentrierungsflächen stößt, der sich der Außennabenachse 16 so weit annähert, dass der Innendurchmesser der Außennabe 7 in diesem Bereich kleiner als der Außendurchmesser des Käfigs 5 ist. In dieser Position liegen die durch den Außendurchmesser D_{K} des Käfigs 5 und den Innendurchmesser D_{A} in der Mitte der Außennabe 7 definierten Achsen deckungsgleich übereinander.

Der Käfig 5 kann in dieser Stellung in die Außennabe 7 eingeschwenkt werden, bis die Achse 35 des Käfigs 5 und die Außennabenachse 16 deckungsgleich übereinander liegen, wie bspw. in Fig. 1 gezeigt. Wie aus Fig. 10 ersichtlich, kann der Käfig 5, angedeutet durch dessen Außendurchmesser D_{K}, in der Außennabe 7 frei verdreht oder verschwenkt werden, wobei er von den Käfigzentrierungsflächen 22, 23 in der Außennabe 7 geführt wird. Durch den der Außennabenachse 16 angenäherten Bereich der Käfigzentrierungsflächen 22, 23 wird zudem verhindert, dass der Käfig 5 in axialer Richtung relativ zu der Außennabe 7 bewegt werden kann, solange die Achse 35 des Käfigs 5 nicht zu weit zu der Außennabenachse 16 verschwenkt wird.

Es ist erkennbar, dass das Einsetzen des Käfigs 5 in die Außennabe 7 in der oben beschriebenen Weise nur dann erfolgen kann, wenn sich in der Außennabe 7 zwei erste Außenlaufrillen 18 mit ersten Käfigzentrierungsflächen 22 bzw. zweite Außenlaufrillen 19 mit zweiten Käfigzentrierungsflächen 23 diametral gegenüberliegen. Dies wird bei gleichmäßig über den Umfang verteilten Außenlaufrillen 18, 19 nur dann erreicht, wenn die Anzahl der Außenlaufrillen 18, 19 ein ganzzahliges Vielfaches von Vier ist.

Wenn der Käfig 5 in die Außennabe 7 eingesetzt ist und die Achse 35 des Kä-figs 5 deckungsgleich zu der Außennabenachse 16 ausgerichtet ist, kann die Innennabe 4 in den Käfig 5 eingesetzt werden. Die Innenkontur des Käfigs 5 ist, wie aus Fig. 4 ersichtlich, zylindrisch und weist einen Innendurchmesser auf, der größer oder gleich dem größten Außendurchmesser der Innennabe 4 ist. Die Innennabe 4 kann daher in den Käfig 5 eingesteckt werden. Dabei wird die Innennabe 4 so zu der Außennabe 7 ausgerichtet, dass erste Innenlaufrillen 12 ersten Außenlaufrillen 18 und zweite Innenlaufrillen 13 zweiten Außenlaufrillen 19 gegenüberliegen und diese Laufrillenpaare 12, 18; 13, 19 bilden.

In dem Käfig 5 sind entsprechend der Anzahl der Laufrillenpaare 12, 18; 13, 19 radiale Fenster 37 angeordnet. Zum Einsetzen der Kugeln 6 in die Fenster 37 des Käfigs 5 wird der Käfig 5 mit der Innennabe 4 relativ zu der Außennabe 7 so weit verschwenkt, dass eines der Fenster 37 auf der Seite der Außenlaufrillen aus der Außennabe 7 heraustritt, auf der der Bahngrund 20 bzw. 21 der Außenlaufrille 18 bzw. 19 seinen größten Abstand zu der Außennabenachse 16 aufweist. Mit anderen Worten wird ein Fenster 37 des Käfigs 5 jeweils so weit aus der Außennabe 7 herausgeschwenkt, dass es aus dieser auf der Seite der größten Öffnung der Laufrillenpaare 12, 18 bzw. 13, 19 heraustritt. In das derart herausgeschwenkte Fenster 37 des Käfigs 5 kann nun eine Kugel 6 eingesetzt werden. Dieser Vorgang ist für jede Kugel 6, d.h. für jedes Laufrillenpaar 12, 18 bzw. 13, 19 einzeln auszuführen.

Die Kugeln 6 verbinden dann die Innennabe 4 und die Außennabe 7 drehfest zur Übermittlung eines Drehmoments. Gleichzeitig ist der Käfig 5 in axialer Richtung in der Außennabe 7 durch die wechselseitigen Käfigzentrierungsflächen 22, 23 geführt und zentriert.

Das Eindringen von Feuchtigkeit in das Gelenk kann dadurch verhindert werden, dass bspw. bei der in Fig. 1 dargestellten Ausführungsform zwischen der Kappe 28 und der Außennabe 7 bzw. dem Aufnahmeteil 8 ein Dichtungsring 38 vorgesehen ist.

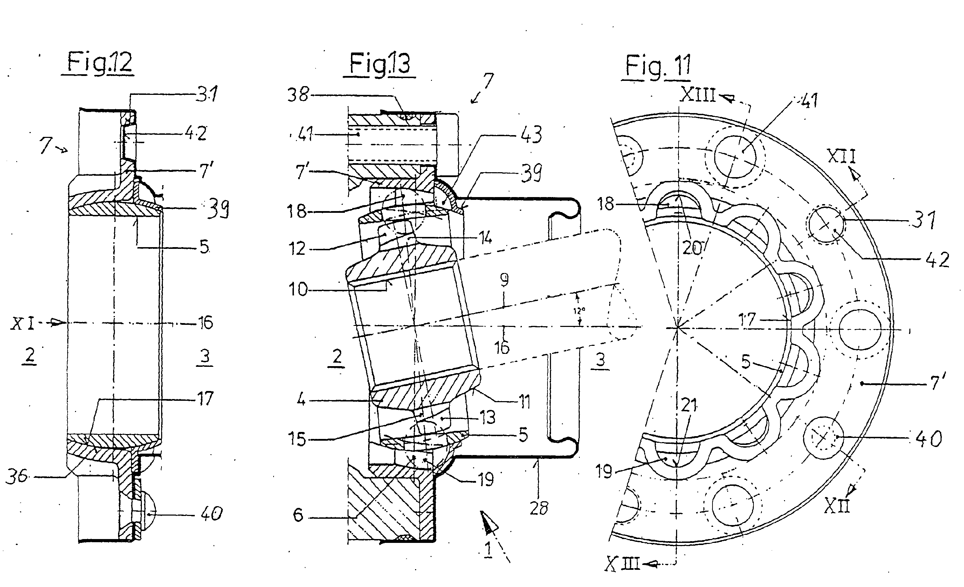

In den Figuren 11 bis 19 sind erfindungsgemäβe Ausführungsformen eines Gegenbahngelenks 1 dargestellt, dessen Außennabe 7 nicht, wie unter Bezugnahme auf die Figuren 1 bis 10 beschrieben, einstückig ist, wobei gleiche Bauteile in allen Ausführungsformen mit den selben Bezugsziffern bezeichnet sind.

Bei dem Gegenbahngelenk 1 nach den Figuren 11 bis 13 ist in den Figuren 12 und 13 ein antriebsseitiges Ende 2 und ein abtriebsseitiges Ende 3 angedeutet, wobei auch bei dieser Ausführungsform die Bezeichnung "antriebsseitig" und "abtriebsseitig" lediglich rein beispielhaft zur besseren Unterscheidbarkeit der beiden Enden gewählt wurde. Das Gegenbahngelenk 1 weist, wie insbesondere aus Fig. 13 ersichtlich, von innen nach außen eine Innennabe 4, einen Käfig 5, in dem Kugeln 6 geführt sind, und eine Außennabe 7 auf. Eine profilierte Scheibe 39 ist bereichsweise auf dem Käfig 5 aufliegend und mit einem Außennabenteil 7' verbunden vorgesehen, so dass die Außennabe 7 von der Scheibe 39 und dem Außennabenteil 7' gebildet wird.

Die Innennabe 4 entspricht im Wesentlichen der oben mit Bezug auf die Figuren 1 und 2 beschriebenen Innennabe, welche ein ringförmiges Bauteil mit zentraler Innennabenachse 9 und einer profilierten Innenfläche 10 zur Verbindung mit einem treibenden oder anzutreibenden Bauteil ist. Die Außenfläche 11 der Innennabe 4 weist mehrere regelmäßig und abwechselnd auf dem Umfang verteilt angeordnete und jeweils hinterschnittfrei verlaufende erste Innenlaufrillen 12 und zweite Innenlaufrillen 13 auf.

Das Außennabenteil 7' ist ein einstückiges ringförmiges Bauteil mit einer Außennabenachse 16, die in der gestreckten Stellung des Gegenbahngelenks 1 mit der Innennabenachse 9 der Innennabe 4 zusammenfällt. Die Innenfläche 17 des Außennabenteils 7' weist erste Außenlaufrillen 18 und zweite Außenlaufrillen 19 auf, die um die Außennabenachse 16 regelmäßig und abwechselnd verteilt angeordnet sind. Im fertig montierten Zustand des Gegenbahngelenks 1 liegen erste Innenlaufrillen 12 der Innennabe 4 ersten Außenlaufrillen 18 des Außennabenteils 7' gegenüber und zweite Innenlaufrillen 13 liegen den zweiten Außenlaufrillen 19 gegenüber und bilden mit diesen jeweils ein Paar.

Die ersten Außenlaufrillen 18 des Außennabenteils 7' verlaufen hinterschnittfrei von dem antriebsseitigen Ende 2 ausgehend in Richtung auf das abtriebsseitige Ende 3 hin, wobei sich ihr Bahngrund 20 dabei der Außennabenachse 16 annähert. Die zweiten Außenlaufrillen 19 verlaufen hinterschnittfrei von dem abtriebsseitigen Ende 3 ausgehend in Richtung auf das antriebsseitige Ende 2 hin, wobei sich ihr Bahngrund 21 dabei der Außennabenachse 16 annähert.

Die profilierte Scheibe 39 ist, wie aus den Figuren 12 und 13 ersichtlich, in dieser Ausführungsform eine Lochscheibe, die bereichsweise an dem Außennabenteil 7' anliegt. Die Scheibe 39 wird durch eine Kappe 28 an dem Außennabenteil 7' gehalten, wobei die Kappe 28 mit der Außennabe über Niete 40 sowie Verschraubungen 41 verbunden ist. Die Kappe 28 liegt bereichsweise an der Scheibe 39 an, so dass die Scheibe 39 durch die Kappe 28 zentriert wird. Die Kappe 28 greift wiederum mit Vorsprüngen 42 in entsprechende Ausnehmungen (Durchgangsbohrungen) 31 des Außennabenteils 7' ein, um die Kappe 28 relativ zu dem Außennabenteil 7' zu zentrieren.

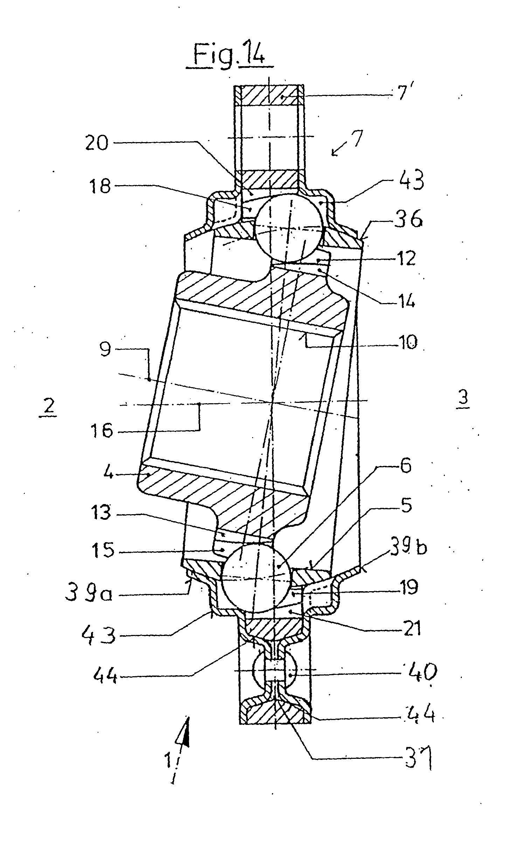

Das Außennabenteil 7' ist in der gezeigten Ausführungsform ein profiliertes Blechteil, es ist jedoch auch möglich, das Außennabenteil 7' als massiven geschlossenen Ring auszubilden, wie bspw. in Fig. 14 dargestellt.

Das Außennabenteil 7' und die profilierte Scheibe 39 bilden in dem zwischen den Außenlaufrillen liegenden Bereichen Käfigzentrierungsflächen, die wechselseitig den Käfig 5 in axialer Richtung führen und zentrieren. Dazu haben die Käfigzentrierungsflächen bereichsweise eine an die Außenkontur des Käfigs 5 angepasste Form, so dass der Käfig 5 in der Außennabe 7 gehalten um seine Achse drehbar wird.

Wie am besten aus der Darstellung von Fig. 12 ersichtlich, weist der Käfig 5 eine kugelige Außenfläche 36 auf, mit der er in radialer Richtung sowie in axialer Richtung zu dem antriebsseitigen Ende 2 des Gegenbahngelenks 1 hin in dem Außennabenteil 7' geführt ist. Gleichzeitig liegt die profilierte Scheibe 39 bereichsweise auf der kugeligen Außenfläche 36 des Käfigs 5 auf, um diesen am abtriebsseitigen Ende 3 des Gegenbahngelenkes 1 in axialer Richtung zu führen. In Fig. 13 ist erkennbar, dass die profilierte Scheibe 39 in dem Bereich der Außenlaufrillen 18, 19 des Außennabenteils 7' Ausbuchtungen 43 aufweist, die mit den Außenlaufrillen in Verbindung stehen. Die Ausbuchtungen 43 dienen einerseits dazu, bei Auslenkung des Gegenbahngelenks 1 die Kugeln 6 aufzunehmen, gleichzeitig bilden die Ausbuchtungen 43 ein Reservoir, in dem Schmiermittel aufgenommen sein kann.

In Fig. 14 ist eine weitere Ausführungsform eines Gegenbahngelenks 1 dargestellt, bei welcher das Außennabenteil 7' als massiver Ring ausgebildet ist, der einen flanschartigen Außenbereich trägt. Auf beiden Seiten des Außennabenteils 7' sind profilierte Scheiben 39a und 39b vorgesehen, die als Lochscheiben ausgebildet sind. Die Scheiben 39a, 39b liegen bereichsweise auf der Außenfläche 36 des Käfigs 5 auf und zentrieren diesen. Im Bereich der Außenlaufrillen 18, 19 weisen die profilierten Scheiben 39a, 39b Ausbuchtungen 43 auf, während sie in den übrigen Bereichen an dem Außennabenteil 7' anliegen, wie in Fig. 14 gestrichelt dargestellt.

Die profilierten Scheiben 39a, 39b sind mit zurückgesetzten Anlagebereichen 44 versehen, die in entsprechende Ausnehmungen 31 des Außennabenteils 7' eingreifen. In diesen Anlagebereichen 44 sind die profilierten Scheiben 39a und 39b über Niete 40 miteinander verbunden. Durch die Anlagebereiche 44 der profilierten Scheiben 39a, 39b wird erreicht, dass diese relativ zu dem Außennabenteil 7' zentriert werden und somit der Käfig 5 ebenfalls relativ zu der Außennabe 7 zentriert ist.

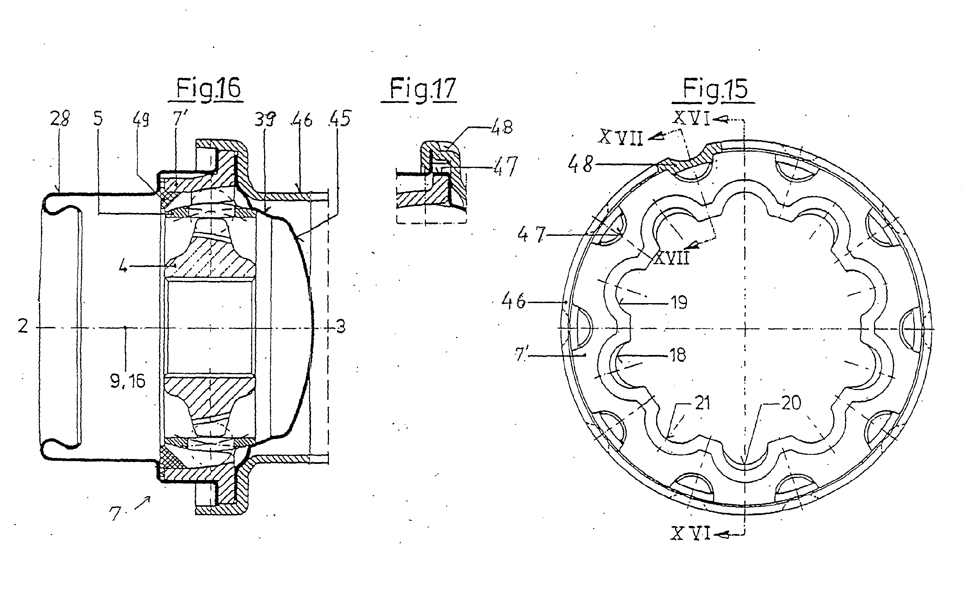

In den Figuren 15 bis 17 ist eine weitere Ausführungsform dargestellt, die eine Abwandlung zu der in den Figuren 11 bis1 3 gezeigten Ausführungsform darstellt. Hierbei ist das Außennabenteil 7' als profiliertes Blechteil ausgebildet, an dem am antriebsseitigen Ende 2 eine Kappe 28 zur Befestigung eines Faltbalgs (nicht dargestellt) angebracht ist. Am abtriebsseitigen Ende 3 des Gegenbahngelenks 1 ist eine profilierte Scheibe 39 an dem Außennabenteil 7' anliegend vorgesehen, die als ein geschlossener Käfigführungsdeckel 45 ausgebildet ist. Der Käfigführungsdeckel 45 sowie das Außennabenteil 7' werden bereichsweise von einem Aufnahmeflansch 46 umgriffen. Der Käfigführungsdeckel 45 ist gegenüber dem Außennabenteil 7' zentriert, indem er in Ausnehmungen 47 am Umfang des Außennabenteils 7' eingreift. Auch der Aufnahmeflansch 46 greift mit Vorsprüngen 48 in diese Ausnehmungen 47 ein, so dass er drehfest mit dem Außennabenteil 7' verbunden ist. Weiter ist in Fig. 16 am antriebsseitigen Ende 2 ein Dichtring 49 dargestellt, der den durch die Außenlaufrillen 18, 19 gebildeten Hohlraum abschließt, so dass bspw. Schmiermittel in diesen Hohlräumen aufgenommen werden kann.

Im Folgenden wird die Montage eines Gegenbahngelenks 1 gemäß den Figuren 11 bis 17 erläutert. Zunächst wird der Käfig 5 auf die Innennabe 4 aufgesteckt und durch eine Montagevorrichtung in Mittenstellung gebracht. Dabei wird in dem Käfig 5 in jedes zweite Fenster eine Kugel 6 eingesetzt und dieser in die Außennabe 7 eingeführt, an der in den Ausführungsformen nach den Figuren 11 bis 13 und 15 bis 17 die profilierte Scheibe 39 noch nicht aufgesetzt ist, bzw. in der Ausführungsform nach Fig. 14 nur eine der beiden profilierten Scheiben 39a oder 39b angebracht ist. Der Käfig 5 wird dabei zum Einführen in das Außennabenteil 7' relativ zu diesem so positioniert, dass die Kugeln in die Außenlaufrillen eingreifen, deren größte Öffnungen dem einzuführenden Käfig zugewandt sind. Mit anderen Worten wird der Käfig mit den Kugeln in Außenlaufrillen eingesetzt, deren Bahngrund auf der Seite des einzusetzenden Käfigs am weitesten von der Außennabe 16 entfernt ist.

Zum Einsetzen der weiteren Kugeln 6 in die Fenster des Käfigs 5 wird dieser mit der Innennabe 4 relativ zu dem Außennabenteil 7' soweit verschwenkt, dass eines der Fenster auf der Seite der Außenlaufrillen aus dem Außennabenteil 7' heraustritt, auf der der Bahngrund 20 bzw. 21 der Außenlaufrille 18 bzw. 19 seinen größten Abstand von der Außennabenachse 16 aufweist. Mit anderen Worten wird ein Fenster des Käfigs 5 soweit aus dem Außennabenteil 7' herausgeschwenkt, dass es aus diesem auf der Seite der größten Öffnung der Laufrillenpaare 12, 18 bzw. 13, 19 heraustritt. In das derart herausgeschwenkte Fenster des Käfigs 5 kann nun eine Kugel 6 eingesetzt werden. Dieser Vorgang ist für jede zweite Kugel 6, d. h. für jedes zweite Laufrillenpaar 12, 18 bzw. 13, 19 einzeln auszuführen.

Abschließend wird die profilierte Scheibe 39 den Käfig 5 zentrierend an das Außennabenteil 7' angelegt und in geeigneter Weise mit diesem zu einer Außennabe 7 verbunden. Die einzelnen Kugeln 6 verbinden dann die Innennabe 4 und die Außennabe 7 drehfest zur Übermittlung eines Drehmoments miteinander. Radiale Kräfte werden von der Innennabe 4 über die Kugeln 6 auf die Außennabe 7 übertragen und umgekehrt. Der Käfig 5 wird dabei in axialer Richtung entweder durch das Außennabenteil 7' und eine profilierte Scheibe 39 oder durch zwei profilierte Scheiben 39a, 39b zentriert.

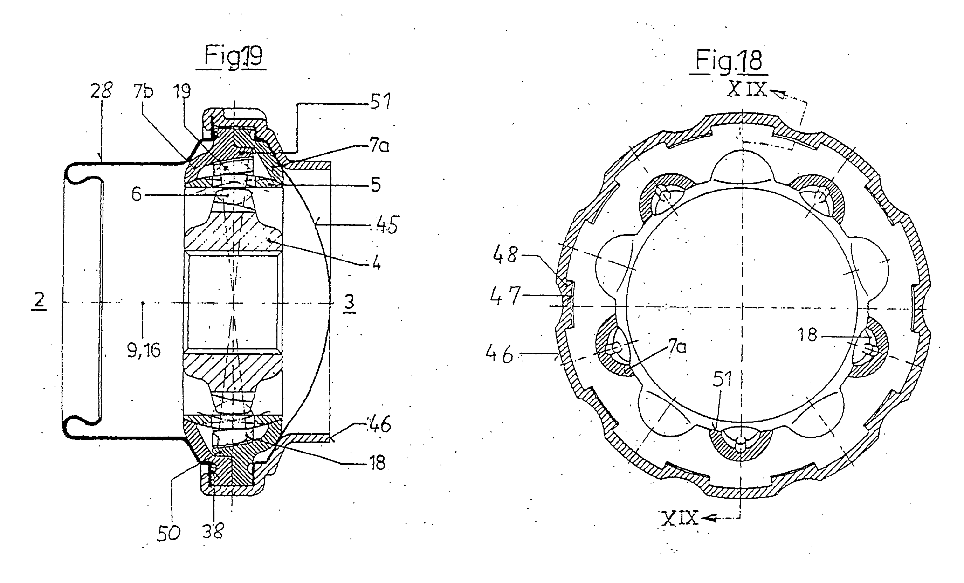

In den Fig. 18 und 19 ist eine Ausführungsform des Gegenbahngelenks dargestellt, in der die Außennabe 7 zweigeteilt ist. Die Außennabe 7 wird durch zwei Ringe 7a, 7b gebildet, die bereichsweise aneinander anliegen und mit Vorsprüngen 50 bzw. 51 klauenartig ineinander eingreifen. Durch die Vorsprünge 50 und 51 werden die beiden Ringe 7a und 7b drehfest miteinander verbunden und zueinander zentriert. Dabei bildet der erste Ring 7a mit seinen Vorsprüngen 50 die ersten Außenlaufrillen 18, während der zweite Ring 7b mit seinen Vorsprüngen 51 die zweiten Außenlaufrillen 19 definiert. Die beiden Ringe 7a und 7b werden von einem Aufnahmeflansch 46 umgriffen und durch diesen zusammengehalten.

Die Ringe 7a und 7b bilden an ihrem an- bzw. abtriebsseitigen Ende Käfigzentrierungsflächen, die bereichsweise der Außenkontur des Käfigs 5 entsprechen und die an dem Käfig 5 anliegen. Der Käfig 5 wird auf diese Weise von den beiden Ringen 7a und 7b der Außennabe 7 zentriert und um seine Achse drehbar geführt.

Das in den Fig. 18 und 19 dargestellte Gegenbahngelenk kann montiert werden, indem die Innennabe 4 in den Käfig 5 eingesetzt wird und durch eine Montagevorrichtung in Mittenstellung gebracht wird. Sämtliche Kugeln 6 können in dieser Position durch die Fenster in den Käfig 5 und die Innenlaufrillen 12 und 13 der Innennabe 4 gesteckt werden. Durch geeignete Mittel, bspw. durch Fett, werden die Kugeln 6 so in dem Käfig 5 gehalten, dass sie nicht aus diesem herausfallen. Es ist dadurch möglich, sämtliche Kugeln 6 automatisiert in den Käfig 5 einzusetzen und diesen mit der Außennabe 7 zu verbinden. Die beiden Ringe 7a und 7b können nun auf den Käfig 5 mit den darin eingesetzten Kugeln 6 aufgesteckt werden, wobei der Ring 7a den Käfig 5 von dem abtriebsseitigen Ende 3 her umgreift und der Ring 7b den Käfig von dem antriebsseitigen Ende 2 her umfasst. Die Ringe 7a und 7b sind dabei so zu der Innennabe 4 ausgerichtet, dass erste Innenlaufrillen 12 ersten Außenlaufrillen 18 und zweite Innenlaufrillen 13 zweiten Außenlaufrillen 19 gegenüberliegen, so dass diese jeweils ein Laufrillenpaar bilden, in dem eine Kugel 6 aufgenommen ist.

Das Eindringen von Feuchtigkeit in das Gelenk kann dadurch verhindert werden, dass zwischen der Kappe 28 und der Außennabe 7 bzw. einem Flansch ein Dichtungsring 38 vorgesehen ist, wie in den Fig. 13 und 19 dargestellt.

### Bezugszeichenliste

- 1: Gegenbahngelenk
- 2: antriebsseitiges Ende
- 3: abtriebsseitiges Ende
- 4: Innennabe
- 5: Käfig
- 6: Kugel
- 7: Außennabe
- 7': Außennabenteil
- 7a, b: Ring
- 8: Aufnahmeteil
- 9: Innennabenachse
- 10: Innenfläche der Innennabe 4
- 11: Außenfläche der Innennabe 4
- 12: erste Innenlaufrille
- 13: zweite Innenlaufrille
- 14: Bahngrund der ersten Innen- laufrille 12
- 15: Bahngrund der zweiten Innen- laufrille 13
- 16: Außennabenachse
- 17: Innenfläche der Außennabe 7
- 18: erste Außenlaufrille
- 19: zweite Außenlaufrille
- 20: Bahngrund der ersten Außen- laufrille 18

- 21: Bahngrund der zweiten Außen- laufrille 19
- 22: erste Käfigzentrierungsflächen
- 23: zweite Käfigzentrierungsflächen
- 26: Entlastungsrille
- 27: Vorsprung
- 28: Kappe
- 29: Dichtscheibe
- 30: Anschlussflansch
- 31: Durchgangsbohrung (Ausneh- mung)
- 32: Ansatz
- 33: Anschlussbohrung
- 34: Befestigungsschelle
- 35: Achse des Käfigs 5
- 36: Außenfläche des Käfigs 5
- 37: radiales Fenster
- 38: Dichtungsring
- 39: profilierte Scheibe
- 39a,: b profilierte Scheibe
- 40: Niet
- 41: Schraubverbindung
- 42: Vorsprung
- 43: Ausbuchtung der Scheibe 39
- 44: Anlagebereich

- 45: Käfigführungsdeckel
- 46: Aufnahmeflansch
- 47: Ausnehmung
- 48: Vorsprung
- 49: Dichtungsring
- 50: Vorsprung
- 51: Vorsprung

- D_{K}: Außendurchmesser des Käfigs 5
- D_{A}: Innendurchmesser der Außennabe 7

## Patentansprüche

1. Gegenbahngelenk, das ein antriebsseitiges Ende (2) und ein abtriebsseitiges Ende (3) aufweist, mit
- einer Innennabe (4), die eine Innennabenachse (9) und eine Außenfläche (11) aufweist, in der erste Innenlaufrillen (12) und zweite Innenlaufrillen (13) um die Innennabenachse (9) abwechselnd verteilt angeordnet sind, wobei die ersten Innenlaufrillen (12) hinterschnittfrei von dem antriebsseitigen Ende (2) ausgehend in Richtung auf das abtriebsseitige Ende (3) verlaufen und sich ihr Bahngrund (14) dabei von der Innennabenachse (9) entfernt und wobei die zweiten Innenlaufrillen (13) hinterschnittfrei von dem abtriebsseitigen Ende (3) ausgehend in Richtung auf das antriebsseitige Ende (2) verlaufen und sich ihr Bahngrund (15) dabei von der Innennabenachse (9) entfernt,
- einer Außennabe (7), die eine Außennabenachse (16) und eine Innenfläche (17) aufweist, in der erste Außenlaufrillen (18) und zweite Außenlaufrillen (19) um die Außennabenachse (16) abwechselnd verteilt angeordnet sind und jeweils die ersten Innenlaufrillen (12) ersten Außenlaufrillen (18) und die zweiten Innenlaufrillen (13) zweiten Außenlaufrillen (19) gegenüberliegen und mit diesen jeweils ein Paar bilden, wobei die ersten Außenlaufrillen (18) hinterschnittfrei von dem antriebsseitigen Ende (2) ausgehend in Richtung auf das abtriebsseitige Ende (3) verlaufen und sich ihr Bahngrund (20) dabei der Außennabenachse (16) annähert und wobei die zweiten Außenlaufrillen (19) hinterschnittfrei von dem abtriebsseitigen Ende (3) ausgehend in Richtung auf das antriebsseitige Ende (2) verlaufen und sich ihr Bahngrund (21) dabei der Außennabenachse (16) annähert,
- einem ringförmigen Käfig (5), der zwischen der Innennabe (4) und der Außennabe (7) angeordnet ist und entsprechend der Anzahl der Laufrillenpaare (12, 18; 13, 19) radiale Fenster aufweist, in denen in die Laufrillen (12, 13, 18, 19) eingreifende Kugeln (6) geführt sind,
**dadurch gekennzeichnet, dass** die Außennabe (7) wenigstens zwei miteinander verbundene Elemente (7', 7a, 7b, 39, 39a, 39b) umfasst, die auf der Außennabenachse (16) hintereinander liegen und gemeinsam den Käfig (5) zentrieren.

2. Gegenbahngelenk nach Anspruch 1, **dadurch gekennzeichnet, dass** die Außennabe (7) zwei massive miteinander verbundene Ringe (7a, 7b) umfasst.

3. Gegenbahngelenk nach Anspruch 2, **dadurch gekennzeichnet, dass** die Ringe (7a, 7b) ineinander greifen, wobei einer der Ringe (7a) die ersten Außenlaufrillen (18) und der zweite Ring (7b) die zweiten Außenlaufrillen (19) aufweist.

4. Gegenbahngelenk nach einem der Ansprüche 1 bis 3, **dadurch gekennzeichnet, dass** an wenigstens einem Ende (2, 3) eines Außennabenteils (7') eine profilierte Scheibe (39) vorgesehen ist, die bereichsweise auf der Käfigaußenfläche (36) den Käfig (5) zentrierend aufliegt.

5. Gegenbahngelenk nach Anspruch 4, **dadurch gekennzeichnet, dass** sowohl am antriebsseitigen Ende (2) als auch am abtriebsseitigen Ende (3) des Außennabenteils (7') profilierte Scheiben (39a, 39b) vorgesehen sind, die bereichsweise auf der Käfigaußenfläche (36) den Käfig (5) zentrierend aufliegen.

6. Gegenbahngelenk nach einem der Ansprüche 4 oder 5, **dadurch gekennzeichnet, dass** die wenigstens eine Scheibe (39) einen Anlagebereich (44) aufweist, mit dem sie zur Positionierung relativ zu dem Außennabenteil (7') mit diesem in Eingriff bringbar ist.

7. Gegenbahngelenk nach einem der Ansprüche 4 oder 5, **dadurch gekennzeichnet, dass** die wenigstens eine Scheibe (39) einen Anlagebereich aufweist, mit dem sie zur Positionierung relativ zu dem Außennabenteil (7') an einem an dem Außennabenteil (7') befestigten Aufnahmeflansch (46) anliegt.

8. Gegenbahngelenk nach Anspruch 7, **dadurch gekennzeichnet, dass** der Aufnahmeflansch (46) drehfest mit dem Außennabenteil (7') verbunden ist.

9. Gegenbahngelenk nach einem der Ansprüche 4 bis 8, **dadurch gekennzeichnet, dass** die wenigstens eine Scheibe (39) entsprechend der Anzahl der Außenlaufrillen (18, 19) von dem Außennabenteil (7') wegragende Ausbuchtungen (43) aufweist, die jeweils mit einer der Außenlaufrillen (18, 19) einen Hohlraum bildend in Verbindung stehen.

10. Gegenbahngelenk nach einem der Ansprüche 4 bis 9, **dadurch gekennzeichnet, dass** wenigstens eine der profilierten Scheiben (39) einen geschlossenen Käfigführungsdeckel (45) bildet.

11. Gegenbahngelenk nach einem der Ansprüche 4 bis 10, **dadurch gekennzeichnet, dass** wenigstens eine der profilierten Scheiben (39) eine Lochscheibe ist.

## Claims

1. A counter track joint, which has a drive-side end (2) and an output-side end (3), having
- an inner hub (4), which has an inner hub axis (9) and an outer surface (11), in which first inner raceways (12) and second inner raceways (13) are arranged distributed alternately around the inner hub axis (9), the first inner raceways (12) extending without an undercut starting from the drive-side end (2) in the direction toward the output-side end (3) and their raceway base (14) moving away from the inner hub axis (9), and the second inner raceways (13) extending without an undercut starting from the output-side end (3) in the direction toward the drive-side end (2) and their raceway base (15) moving away from the inner hub axis (9),
- an outer hub (7), which has an outer hub axis (16) and an inner surface (17), in which first outer raceways (18) and second outer raceways (19) are arranged distributed alternately around the outer hub axis (16) and in each case the first inner raceways (12) are opposite to first outer raceways (18) and the second inner raceways (13) are opposite to second outer raceways (19) and form a pair therewith in each case, the first outer raceways (18) extending without an undercut starting from the drive-side end (2) in the direction toward the output-side end (3) and their raceway base (20) approaching the outer hub axis (16), and the second outer raceways (19) extending without an undercut starting from the output-side end (3) in the direction toward the drive-side end (2) and their raceway base (21) approaching the outer hub axis (16),
- a ring-shaped cage (5), which is arranged between the inner hub (4) and the outer hub (7) and has radial windows corresponding to the number of the raceway pairs (12, 18; 13, 19), in which balls (6) engaging in the raceways (12, 13, 18, 19) are guided,
**characterized in that** the outer hub (7) comprises at least two elements (7' , 7a, 7b, 39, 39a, 39b), which are connected to one another, and which are located one behind another on the outer hub axis (16) and jointly center the cage (5).

2. The counter track joint according to Claim 1, **characterized in that** the outer hub (7) comprises two solid rings (7a, 7b), which are connected to one another.

3. The counter track joint according to Claim 2, **characterized in that** the rings (7a, 7b) engage in one another, one of the rings (7a) having the first outer raceways (18) and the second ring (7b) having the second outer raceways (19).

4. The counter track joint according to one of Claims 1 to 3, **characterized in that** a profiled disc (39), which presses in regions against the cage outer surface (36) to center the cage (5), is provided on at least one end (2, 3) of an outer hub part (7').

5. The counter track joint according to Claim 4, **characterized in that** profiled discs (39a, 39b), which press in regions against the cage outer surface (36) to center the cage (5), are provided on both the drive-side end (2) and also on the output-side end (3) of the outer hub part (7').

6. The counter track joint according to one of Claims 4 or 5, **characterized in that** the at least one disc (39) has a contact area (44), using which it can be engaged with the outer hub part (7') for positioning in relation thereto.

7. The counter track joint according to one of Claims 4 or 5, **characterized in that** the at least one disc (39) has a contact area, using which it presses against a receptacle flange (46) fastened on the outer hub part (7'), for positioning relative to the outer hub part (7_{'}).

8. The counter track joint according to Claim 7, **characterized in that** the receptacle flange (46) is connected in a rotationally-fixed manner to the outer hub part (7').

9. The counter track joint according to one of Claims 4 to 8, **characterized in that** the at least one disc (39) has bulges (43) protruding away from the outer hub part (7'), which are each connected to one of the outer raceways (18, 19) to form a cavity, corresponding to the number of the outer raceways (18, 19).

10. The counter track joint according to one of Claims 4 to 9, **characterized in that** at least one of the profiled discs (39) forms a closed cage guiding cover (45) .

11. The counter track joint according to one of Claims 4 to 10, **characterized in that** at least one of the profiled discs (39) is a perforated disc.

## Revendications

1. Articulation de contre-voie présentant une extrémité motrice (2) et une extrémité menée (3), comportant
- un moyeu intérieur (4) qui présente un axe de moyeu intérieur (9) et une surface extérieure (11) dans laquelle des premières gorges de roulement intérieures (12) et des secondes gorges de roulement intérieures (13) sont disposées réparties alternativement autour de l'axe de moyeu intérieur (9), les premières gorges de roulement intérieures (12) s'étendant sans contre-dépouille en partant de l'extrémité motrice (2) en direction de l'extrémité menée (3) et leur base de voie (14) s'éloignant alors de l'axe de moyeu intérieur (9) et les secondes gorges de roulement intérieures (13) s'étendant sans contre-dépouille en partant de l'extrémité menée (3) en direction de l'extrémité motrice (2) et leur base de voie (15) s'éloignant alors de l'axe de moyeu intérieur (9),
- un moyeu extérieur (7) qui présente un axe de moyeu extérieur (16) et une surface intérieure (17) dans laquelle des premières gorges de roulement extérieures (18) et des secondes gorges de roulement extérieures (19) sont disposées réparties alternativement autour de l'axe de moyeu extérieur (16) et respectivement les premières gorges de roulement intérieures (12) font face aux premières gorges de roulement extérieures (18) et les secondes gorges de roulement extérieures (13) aux secondes gorges de roulement extérieures (19) et constituent respectivement avec celles-ci une paire, les premières gorges de roulement extérieures (18) s'étendant sans contre-dépouille en partant de l'extrémité motrice (2) en direction de l'extrémité menée (3) et leur base de voie (20) se rapprochant alors de l'axe de moyeu extérieur (16) et les secondes gorges de roulement extérieures (19) s'étendant sans contre-dépouille en partant de l'extrémité menée (3) en direction de l'extrémité motrice (2) et leur base de voie (21) se rapprochant alors de l'axe de moyeu extérieur (16),
- une cage de forme annulaire (5) qui est disposée entre le moyeu intérieur (4) et le moyeu extérieur (7) et présente en fonction du nombre de paires de gorges de roulement (12, 18 ; 13, 19) des fenêtres radiales dans lesquelles sont guidées des billes (6) s'engrenant dans les gorges de roulement (12, 13, 18, 19),
**caractérisée en ce que** le moyeu extérieur (7) comprend au moins deux éléments reliés entre eux (7', 7a, 7b, 39, 39a, 39b) qui sont placés l'un derrière l'autre sur l'axe de moyeu extérieur (16) et centrent ensemble la cage (5).

2. Articulation de contre-voie selon la revendication 1, **caractérisée en ce que** le moyeu extérieur (7) comprend deux anneaux massifs reliés entre eux (7a, 7b).

3. Articulation de contre-voie selon la revendication 2, **caractérisée en ce que** les anneaux (7a, 7b) s'engrènent l'un dans l'autre, un des anneaux (7a) présentant les premières gorges de roulement extérieures (18) et le second anneau (7b) les secondes gorges de roulement extérieures (19).

4. Articulation de contre-voie selon une des revendications 1 à 3, **caractérisée en ce que**, à au moins une extrémité (2, 3) d'une pièce de moyeu extérieur (7'), il est prévu un disque profilé (39) qui repose par endroits sur la surface extérieure de la cage (36) en centrant la cage (5).

5. Articulation de contre-voie selon la revendication 4, **caractérisée en ce que**, aussi bien à l'extrémité motrice (2) qu'à l'extrémité menée (3) de la pièce de moyeu extérieur (7'), il est prévu des disques profilés (39a, 39b) qui reposent par endroits sur la surface extérieure de la cage (36) en centrant la cage (5) .

6. Articulation de contre-voie selon une des revendications 4 ou 5, **caractérisée en ce que** l'au moins un disque (39) présente une zone de contact (44) par laquelle, pour un positionnement par rapport à la pièce de moyeu extérieur (7'), il peut être amené en engrènement avec celle-ci.

7. Articulation de contre-voie selon une des revendications 4 ou 5, **caractérisée en ce que** l'au moins un disque (39) présente une zone de contact par laquelle, pour le positionnement par rapport à la pièce de moyeu extérieur (7_{'}), il repose sur une bride support (46) fixée à la pièce de moyeu extérieur (7').

8. Articulation de contre-voie selon la revendication 7, **caractérisée en ce que** la bride support (46) est reliée de manière fixe en rotation à la pièce de moyeu extérieur (7'),

9. Articulation de contre-voie selon une des revendications 4 à 8, **caractérisée en ce que** l'au moins un disque (39) présente, en fonction du nombre de gorges de roulement extérieures (18, 19), des bombements (43) dépassant de la pièce de moyeu extérieur (7') et qui sont respectivement en liaison avec une des gorges de roulement extérieures (18, 19) en formant une cavité.

10. Articulation de contre-voie selon une des revendications 4 à 9, **caractérisée en ce qu'**au moins un des disques profilés (39) forme un couvercle de guidage de cage fermé (45).

11. Articulation de contre-voie selon une des revendications 4 à 10, **caractérisée en ce qu'**au moins un des disques profilés (39) est un disque perforé.
